# EUROPÄISCHE PATENTSCHRIFT

(11) **EP 4 436 817 B1**
(45) Veröffentlichungstag und Bekanntmachung des Hinweises auf die Patenterteilung: **24.06.2026**
(21) Anmeldenummer: 22818714.2
(22) Anmeldetag: 18.11.2022
(51) Int. Cl.: B60K 35/25, B60K 35/10, B60K 35/60

(54) **BEDIENVORRICHTUNG FÜR EIN FAHRZEUG**
OPERATING DEVICE FOR A VEHICLE
DISPOSITIF DE COMMANDE POUR UN VÉHICULE

(30) Priorität: 22.11.2021 DE 102021130513
(43) Veröffentlichungstag der Anmeldung: 02.10.2024
(73) Patentinhaber: AUO Mobility Solutions Germany GmbH, 59557 Lippstadt (DE)
(72) Erfinder: KARLICZEK, Markus, 59557 Lippstadt (DE)
(74) Vertreter: dompatent
(86) Internationale Anmeldenummer: PCT/EP2022/082423
(87) Internationale Veröffentlichungsnummer: WO 2023/089099

(56) Entgegenhaltungen:
- EP-B1- 3 574 393
- DE-A1- 102018 118 839
- FR-A1- 3 056 474

## Beschreibung

Die Erfindung betrifft eine Bedienvorrichtung für ein Fahrzeug, wobei die Bedienvorrichtung ein typischerweise kapazitiv arbeitendes Touch-Panel mit einer dementsprechend berührungssensitiven Oberseite aufweist, auf der eine Bedieneinheit mit einem manuell erfassbaren Bedienelement angeordnet ist, das sich translatorisch und/oder rotatorisch in zur Oberseite des Touch-Panels paralleler Richtung bewegen lässt sowie automatisch reversibel orthogonal zur Oberseite des Touch-Panels bewegen lässt, nämlich niederdrücken lässt.

Touch-Panel insbesondere Touch-Screens haben sich als Bedienvorrichtungen für Fahrzeuge in den letzten Jahren mehr und mehr durchgesetzt. Mitunter komfortabler allerdings ist die Eingabe von Bedienbefehlen durch manuell erfassbare Bedienelemente, die als Schieber oder als Drehsteller mit Drückfunktion ausgeführt sind.

Es ist bereits verschiedentlich beschrieben worden, manuell betätigbare Bedienelemente mit Touch-Panels bzw. Touch-Screens zu kombinieren. Beispiele hierfür sind in DE-C-197 43 283, DE-A-10 2006 043 208, DE-A-10 2010 010 574, DE-A-10 2011 007 112 und EP-A-2 302 799 beschrieben. Bei den bekannten Bedienvorrichtungen bewegt sich ein mit dem Bedienelement gekoppeltes Geberelement auf der berührungssensitiven Oberfläche des Touch-Panels, um dessen Berührungssensorik für die Ermittlung der aktuellen Bewegungsposition des Bedienelements zu nutzen. Wünschenswert ist es mitunter, dass das Bedienelement vom Benutzer wahlweise an verschiedenen Stellen des Touch-Panels positioniert werden kann. Geberelemente, die sich auf der Oberfläche des Touch-Panel bewegen, können zu Beschädigungen und Abnutzungen der berührungssensitiven Oberfläche des Touch-Panel führen (Kratzer, Schleifspuren etc.), was vermieden werden sollte.

Aus WO-A-2018/137944 (entspricht EP 3 574 393 B1) ist eine Bedienvorrichtung für ein Kraftfahrzeug bekannt, bei dem zwischen dem drehbaren Bedienelement und dem Touch-Panel ein Ring oder eine Scheibe angeordnet ist, die längs einer Kreislinie abwechselnd elektrisch leitende und elektrisch nicht leitende Bereiche aufweist. Diese Kreislinie wird bei Verdrehung des Bedienelements mittels eines Schleifers abgefahren, der elektrisch leitend ist und elektrisch leitend mit der Oberfläche des Bedienelements verbunden ist, die ihrerseits ebenfalls elektrisch leitend ist. Bei Berührung des Bedienelements entsteht damit eine kapazitive Kopplung zwischen der Unterseite des Halteelements (nämlich im Bereich von dessen leitenden Abschnitten) mit dem Touch-Panel. Das wiederum kann genutzt werden, um vermittels der Berührungssensorik des Touch-Panel die Drehposition des Bedienelements zu detektieren. Zusätzlich lässt sich das bekannte Bedienelement auch niederdrücken, wobei im niedergedrückten Zustand zusätzliche elektrische/kapazitive Kopplungen zwischen dem Bedienelement und dem Touch-Panel entstehen, die für die Detektion, dass das Bedienelement gedrückt worden ist, genutzt werden können.

Die bekannte Bedienvorrichtung weist also mehrere Elemente auf, die zweckmäßigerweise auf einfacher Art und Weise montiert werden können sollten. Hinzu kommt, dass ein derartiges Bedienelement auch über eine entsprechende Haptik verfügen sollte. Diese Haptik-Funktionalität wird typischerweise durch Schleifer oder Federelemente realisiert, die aber im Stand der Technik durch gegenüber den Detektionsschleifern separat vorgesehene Elemente realisiert werden. Dies erhöht den Montageaufwand.

Aus DE-A-10 2006 036 636 ist eine Rasteinrichtung für ein Dreh-/Drückbedienelement eines Fahrzeugs bekannt, bei dem für die ausschließlich mechanisch wirkenden Funktionen des reversiblen Niederdrückers und des Verdrehens ein Bauteil mit zwei Federfunktionen benutzt wird. Keine der hierzu verwendeten Federarme (für die Niederdrückfunktion) und Federzungen (für die Verrastung beim Verdrehen) hat eine elektrische Funktion.

Weitere Dreh-/Drücksteller, die auf einer berührungssensitiven Oberfläche angeordnet sind, sind beschrieben in DE-A-10 2016 121 076, DE-A-10 2018 118 809, DE-A-10 2018 118 839 und WO-A-2018/114138.

Aufgabe der Erfindung ist es, den Aufbau und die Montage einer Bedienvorrichtung der eingangs genannten Art weiter zu vereinfachen.

Zur Lösung dieser Aufgabe wird mit der Erfindung eine Bedienvorrichtung für ein Fahrzeug vorgeschlagen, die versehen ist mit
- einem kapazitiv arbeitenden Touch-Panel, das eine berührungssensitive Oberseite aufweist,
- einer Bedieneinheit, die ein manuell erfassbares Bedienelement mit einer elektrisch leitenden Oberfläche und ein mit einer Oberseite und einer dieser abgewandten Unterseite versehenes Halteelement aufweist, an welchem das Bedienelement translatorisch und/oder rotatorisch in zur Oberseite des Touch-Panels parallelen Richtung und orthogonal zur Oberseite des Touch-Panels bewegbar angeordnet ist,
- wobei das Bedienelement mindestens ein mit der elektrisch leitenden Oberfläche des Bedienelements elektrisch verbundenes Bewegungs-Detektionsgeberelement in Form vorzugsweise eines Schleifers aufweist, das bei Bewegung des Bedienelements auf einer Abtastbahn des Halteelements entlang gleitet,
- wobei das Halteelement längs der Abtastbahn wechselweise aufeinanderfolgende erste Abschnitte und zweite Abschnitte aufweist,
- wobei die Ober- und die Unterseite des Halteelements in den ersten Abschnitten jeweils miteinander elektrisch leitend verbunden und in den zweiten Abschnitten jeweils voneinander elektrisch isoliert sind,
- wobei die Bedieneinheit eine Rasteinrichtung mit mindestens einem elastischen Rastelement und einer Rastbahn mit wechselweise aufeinanderfolgend angeordneten Rasterhöhungen und Rastvertiefungen aufweist,
- wobei die Abtastbahn der Bedieneinheit als Rastbahn der Rasteinrichtung ausgebildet ist und die Rasterhöhungen sowie die Rastvertiefungen aufweist, wobei das mindestens eine Rastelement auch als Bewegungs-Detektionsgeberelement fungiert,
- wobei das Bedienelement der Bedieneinheit in Richtung auf das Halteelement reversibel niederdrückbar ist und mindestens ein mit der elektrisch leitenden Oberfläche des Bedienelements elektrisch verbundenes Drück-Detektionsgeberelement aufweist, das im niedergedrückten Zustand des Bedienelements unabhängig von dessen Bewegungsposition mindestens einen der die Oberseite des Halteelements mit dessen Unterseite elektrisch verbindenden ersten Abschnitt der Abtastbahn der Bedieneinheit elektrisch leitend kontaktiert und im nicht niedergedrückten Zustand des Bedienelement im Abstand zur Abtastbahn der Bedieneinheit angeordnet ist, und
- einem elektrisch leitenden Federelement, das ein elektrisch leitend mit der Oberfläche des Bedienelements verbundenes Trägerelement aufweist, von dem mindestens ein erster Federarm, der als Bewegungs-Detektionsgeberelement und dem Rastelement fungiert, mindestens ein zweiter Federarm, der als Drück-Detektionsgeberelement fungiert, und mindestens ein dritter Federarm absteht, der als Rückholfeder für die Zurückbewegung des Bedienelements nach einem Niederdrücken desselben fungiert,
- wobei die drei Federarme einstückig mit dem gemeinsamen Trägerelement ausgebildet sind.

Die erfindungsgemäße Bedienvorrichtung weist ein kapazitiv arbeitendes Touch-Panel auf, auf dessen berührungssensitiver Oberseite ein Halteelement für die rotatorische und/oder translatorische Lagerung eines Bedienelements angeordnet ist. Das Bedienelement ist Teil einer Bedieneinheit und weist eine elektrisch leitende Oberfläche auf. Das Bedienelement lässt sich nicht nur translatorisch und/oder rotatorisch bewegen, sondern auch reversibel niederdrücken.

Für die Haptik bei Verdrehung bzw. translatorischer Verschiebung des Bedienelements dient eine Abtasteinrichtung mit einer Rastbahn, die abwechselnd aufeinanderfolgend angeordnete Rasterhöhungen und Rastvertiefungen aufweist. Abgetastet wird diese Rastbahn von einem elastischen Rastelement, worauf weiter unten noch eingegangen werden wird. Die Rastbahn dient auch der elektrischen Abtastung durch ein elektrisch leitendes Bewegungs-Detektionsgeberelement, das typischerweise als Schleifer ausgeführt ist und somit auch die Funktion des Rastelements übernimmt. Die Rastbahn weist abwechselnd angeordnete elektrisch leitende und elektrisch nicht leitende Abschnitte auf, wodurch die Oberseite der Rastbahn in den elektrisch leitenden Abschnitten mit der Unterseite des Halteelements elektrisch verbunden ist.

Neben dem Bewegungs-Detektionsgeberelement weist die Bedieneinheit auch noch ein Drück-Detektionsgeberelement auf, das ebenfalls elektrisch leitend ausgeführt ist und das wie auch das Bewegungs-Detektionsgeberelement elektrisch leitend mit der Oberfläche des Bedienelements verbunden ist. Im nicht gedrückten Zustand kontaktiert das Drück-Detektionsgeberelement die Abtastbahn nicht; dies erfolgt vielmehr ausschließlich im niedergedrückten Zustand des Bedienelements. Dabei sind die beiden zuvor genannten Detektionsgeberelemente versetzt gegeneinander angeordnet, so dass in jeder Dreh- bzw. Verschiebestellung des Bedienelements beim Niederdrücken das Drück-Detektionsgeberelement auf jeden Fall einen anderen elektrisch leitenden Abschnitt der Abtastbahn kontaktiert als es für das Bewegungs-Detektionsgeberelement gilt. Alternativ kann das Drück-Detektionsgeberelement im niedergedrückten Zustand des Bedienelements mit den ersten und zweiten Abschnitten der Abtastbahn jeweils verbundene Fortsätze kontaktieren, die wechselweise elektrisch leitend zur Unterseite des Halteelements ausgebildet sind.

Damit sprechen in jeder Bewegungsstellung des Bedienelements andere berührungssensitive Bereiche des Touch-Panels an, wodurch die Bewegungsposition des Bedienelements detektierbar ist. Wird nun in einer Bewegungsposition das Bedienelement gedrückt, so tritt das Drück-Detektionsgeberelement in Kontakt mit mindestens einem der elektrisch leitenden Abschnitte, so dass nun an einer weiteren sensitiven Stelle des Touch-Panel ein Signal erzeugt wird. Zweckmäßigerweise sind mehrere Drück-Detektionsgeberelemente vorgesehen, deren Lage relativ zueinander bekannt ist. Wenn man also nun über das Touch-Panel die z.B. drei verschiedenen Stellen, die so relativ zueinander positioniert sind, wie es die Drück-Detektionsgeberelemente sind, Signale erhält, so kann dies also Einnahme der Niederdrückposition des Bedienelement gewertet werden.

Erfindungsgemäß sind die beiden Typen von Detektionsgeberelemente und mindestens eine Rückholfeder zur Realisierung der reversiblen Niederdrückbarkeit des Bedienelements integraler Bestandteil ein und desselben elektrisch leitenden Federelements. Zu diesem Zweck weist dieses Federelement ein mit der Oberfläche des Bedienelements elektrisch verbundenes Trägerelement auf, von dem Federarme abstehen. So weist das Trägerelement mindestens einen ersten Federarm auf, der als Bewegungs-Detektionsgeberelement und Rastelement fungiert und mit dem demzufolge die als Rastbahn ausgeführte Abtastbahn überstrichen wird, wenn das Bedienelement translatorisch oder rotatorisch bewegt wird. Von dem Trägerelement steht ferner mindestens ein zweiter Federarm ab, der die Funktion des Drück-Detektionsgebeelements übernimmt und erst dann in Kontakt mit der Abtastbahn gelangt, wenn das Bedienelement gedrückt ist. Schließlich weist das Trägerelement auch noch einen dritten Federarm auf, der die Funktion der Rückholfeder für die reversible Zurückbewegung des Bedienelements nach dessen Niederdrücken übernimmt.

Durch diese Konzentration von elektrischen und haptischen Funktionen der Bedieneinheit in einem einzigen Federelement lässt sich die Bedieneinheit auf einfache Art und Weise montieren und damit herstellen. Die Anzahl an zu verbauenden Bauteilen ist dementsprechend reduziert, was sowohl den Herstellungs- als auch den Montageprozess begünstigt.

In zweckmäßiger Ausgestaltung der Erfindung kann vorgesehen sein, dass das Trägerelement des Federelements mit dem Bedienelement verbunden und bei dessen rotatorischer und/oder translatorischer Bewegung sowie Bewegung orthogonal dazu mit dem Bedienelement mitbewegbar ist und dass ein zusätzliches Bauteil der Bedienvorrichtung eine Abstützfläche für den dritten Federarm aufweist, an der der dritte Federarm anliegt und in Relation zu der das Bedienelement beim Niederdrücken bewegbar ist. Das Trägerelement und damit das Federelement wird also zusammen mit dem Bedienelement mitbewegt. An dem Bedienelement befindet sich eine Abstützfläche für den mindestens einen dritten Federarm, auf der sich der mindestens eine dritte Federarm abstützt und in Relation zu dem sich der mindestens eine dritte Federarm bewegt. Das Bedienelement ist somit orthogonal zur Oberseite des Touch-Panel an dem zusätzlichen Bauteil bewegbar, das von dem Bedienelement bei rotatorischer und/oder translatorischer Bewegung mitbewegt wird und relativ zu dem Bedienelement niederdrückbar ist. Dieses Bauteil weist dann die Abstützfläche für den mindestens einen dritten Federarm bzw. Abstützflächen für jeden dritten Federarm auf, auf der der jeweilige Federarm bevorzugt entlang gleiten kann.

Vorteilhaft ist es, wenn man vermittels spezieller Ausführungen des Trägerelements und des Bedienelements zusätzlich noch dafür sorgen kann, dass eine Drück-Haptik realisiert wird. Hierzu wird gemäß einer ersten Variante in vorteilhafter Ausgestaltung der Erfindung vorgeschlagen, dass die Abstützfläche einen Vorsprung, über den der dritte Federarm beim Niederdrücken des Bedienelements gleitet, und/oder eine Vertiefung aufweist, in die hinein der dritte Federarm beim Niederdrücken des Bedienelements eintaucht. Das heißt, dass der dritte Federarm neben seiner Rückholfederfunktion auch die Funktion zur Realisierung der Drück-Haptik übernimmt.

Als eine Variante für die Realisierung der Drück-Haptik kann in vorteilhafter Weiterbildung der Erfindung vorgesehen sein, dass der zweite Federarm einen Auslenkvorsprung oder eine Auslenkvertiefung aufweist, wobei der zweite Federarm beim Niederdrücken des Bedienelements durch den Auslenkvorsprung oder durch die Auslenkvertiefung reversibel verformbar ist und dadurch bei Kontaktierung der Abtastbahn zum Erreichen der Niederdrückposition des Bedienelements manuell zu überwindender mechanischer Widerstand entsteht. Der mindestens eine zweite Federarm bzw. jeder zweite Federarm, der zunächst die Funktion eines Drück-Detektionsgeberelements übernimmt, dient nun auch für den Aufbau eines mechanischen Widerstandes beim Niederdrücken des Bedienelements, wodurch die Drück-Haptik entsteht.

In einer alternativen Ausgestaltung zum zuvor genannten Konzept ist vorteilhafterweise vorgesehen, dass längs der Abtastbahn der Bedieneinheit ein Auslenkvorsprung oder eine Auslenkvertiefung für den bzw. jeden zweiten Federarm ausgebildet ist, wobei der zweite Federarm beim Niederdrücken des Bedienelements durch den Auslenkvorsprung oder durch die Auslenkvertiefung reversibel verformbar ist und dadurch bei Kontaktierung der Abtastbahn oder von mit den ersten und zweiten Abschnitten der Abtastbahn jeweils verbundenen Fortsätzen, die wie die ersten und zweiten Abschnitte der Abtastbahn wechselweise elektrisch mit der Unterseite des Halteelements verbunden sind, ein zum Erreichen der Niederdrückposition des Bedienelements manuell zu überwindender mechanischer Widerstand entsteht.

Hier ist es nun ebenfalls der zweite Federarm, der zusätzlich für die Drück-Haptik sorgt. Dies erfolgt nun aber anders als zuvor nicht durch eine spezielle Formgebung des zweiten Federarms bzw. jedes zweiten Federarms sondern durch eine Formgebung an der Abtastbahn, die längs ihrer Erstreckung einen lateralen Auslenkvorsprung oder eine laterale Auslenkvertiefung aufweist. In sämtlichen vier zuvor genannten Fällen kommt es dabei stets zu einer reversiblen Verbiegung des mindestens einen zweiten Federarms bzw. jedes zweiten Federarms kurz vor Erreichung der Niederdrückposition des Bedienelements, wodurch ein mechanischer Widerstand aufgebaut wird, der beim Niederdrücken überwunden wird.

In weiterer zweckmäßiger Ausgestaltung der Erfindung kann vorgesehen sein, dass die Abtastbahn eine parallel zur Oberseite des Touch-Panels weisende Oberfläche oder eine Oberfläche aufweist, die orthogonal zur Oberseite des Touch-Panels ausgerichtet ist. Das bedeutet, dass im Falle eines Drehstellers die wellenförmige Abtastbahn radial (parallel zur Oberseite des Touch-Panel) oder axial (orthogonal zur Oberseite des Touch-Panel) ausgerichtet ist. Die länglichen "Täler" der Abtastbahn erstrecken sich also entweder parallel zur Oberseite des Touch-Panel oder aber senkrecht dazu. Ganz grundsätzlich gilt, dass die Abtastbahn entweder linear (für den Fall, dass das Bedienelement als Schieber ausgeführt ist) oder aber als Ring oder als Kreissegment (bei einem vollständig drehbaren oder nur teilweise drehbaren Bedienelement) verläuft.

Zweckmäßig ist es ferner, wenn insbesondere hinsichtlich des als Rückholfeder dienenden dritten Federarms mehrere derartiger Federarme gleichmäßig verteilt angeordnet sind. Im Falle eines niederdrückbaren Drehstellers bzw. Drehkopfs oder Drehrings ist es von Vorteil, wenn drei dritte Federarme um 120° versetzt zueinander angeordnet sind. Ähnliche Überlegungen gelten aber ganz entsprechend für die ersten und zweiten Federarme. Jede dieser Federarmgruppen aus ersten oder zweiten oder dritten Federarme sollte gleichmäßig verteilt angeordnete Federarme aufweisen. Dies dient zum einen dem verkippsicheren Niederdrücken des Bedienelements und zum anderen der Vergleichmäßigung der Kräfte, die die einzelnen Federarme zusätzlich in das Bedienelement einbringen.

In weiterer vorteilhafter Ausgestaltung der Erfindung ist vorgesehen, dass der zweite Federarm ein Kontaktende zur Kontaktierung der Abtastbahn bei niedergedrücktem Bedienelement aufweist, wobei das Kontaktende, in Erstreckung der Aufeinanderfolge der ersten und zweiten Abschnitte betrachtet, eine Abmessung aufweist, die größer ist als die Erstreckung der ersten und der zweiten Abschnitte. Dies stellt sicher, dass bei Kontaktierung der Abtastbahn jeder zweite Federarm in jedem Fall in elektrischen Kontakt mit einem der elektrisch leitenden ersten Abschnitt der Abtastbahn gelangt und damit kapazitiv an das Touch-Panel angekoppelt ist, wenn das Bedienelement niedergedrückt ist.

Vorteilhaft kann es ferner sein, wenn das Bedienelement mindestens zwei längs der Abtastbahn versetzt zueinander angeordnete Bewegungs-Detektionsgeberelemente und damit mindestens zwei erste Federarme aufweist, wobei sich der Versatz zwischen zwei der Bewegungs-Detektionsgeberelementen bzw. zwischen zwei der ersten Federarmen über eine Länge erstreckt, die gleich der Erstreckung aufeinanderfolgender erster und zweiter Abschnitte mit entweder einer gradzahligen Anzahl von ersten Abschnitten und einer ungradzahligen Anzahl von zweiten Abschnitten oder mit einer ungradzahligen Anzahl von ersten Abschnitten und einer gradzahligen Anzahl von zweiten Abschnitten ist, wobei in jeder Bewegungsposition des Bedienelements einer dieser beiden Bewegungs-Detektionsgeberelemente bzw. einer dieser beiden ersten Federarmen einen ersten Abschnitt der Abtastbahn kontaktiert.

Typischerweise von Vorteil ist es, wenn das Bedienelement mindestens zwei längs der Abtastbahn versetzt angeordnete Drück-Detektionsgeberelemente und damit mindestens zwei zweite Federarme aufweist, wobei in jeder Bewegungsposition des Bedienelements mindestens einer dieser beiden Drück-Detektionsgeberelemente bzw. mindestens einer dieser beiden zweiten Federarme einen ersten Abschnitt der Abtastbahn kontaktiert.

Bei einer weiteren Ausgestaltung der Erfindung kann vorgesehen sein, dass sich der Versatz zwischen den beiden besagten Drück-Detektionsgeberelementen bzw. zwischen den beiden besagten zweiten Federarme über eine Länge erstreckt, die gleich der Erstreckung aufeinanderfolgender erster und zweiter Abschnitte mit entweder einer gradzahligen Anzahl von ersten Abschnitten und einer ungradzahligen Anzahl von zweiten Abschnitten oder einer ungradzahligen Anzahl von ersten Abschnitten und einer gradzahligen Anzahl von zweiten Abschnitten ist.

Es ist ferner von Vorteil, wenn sich jeder längs der Abtastbahn angeordnete erste und zweite Abschnitte des Halteelements von der Mitte einer Rastvertiefung bis zur Mitte einer benachbarten Rastvertiefung oder von der Mitte einer Rasterhöhung bis zur Mitte einer benachbarten Rasterhöhung erstreckt.

In einer weiteren vorteilhaften Ausgestaltung der Erfindung ist vorgesehen, dass das Bedienelement als ein niederdrückbarer Schieber oder ein niederdrückbarer Drehsteller (bspw. Drehring oder Drehknopf) ausgebildet ist. Das Bedienelement kann z.B. ein offener oder geschlossener Dreh-/Drücksteller sein, der in seiner Ausbildung als Ring im Innern den Blick auf das Touch-Panel ermöglicht, so dass dort angezeigte Information, wie es bei einem Touch-Screen der Fall ist, sichtbar wird, oder der in geschlossener Ausführung z.B. eine eigene Anzeigevorrichtung aufweisen kann.

Ferner ist es von Vorteil, wenn das Touch-Panel als Teil eines Touchscreens oder als ein kapazitiv arbeitendes Touch-Pad oder als eine kapazitiv arbeitende Touch-Folie ausgebildet ist.

Es ist außerdem von Vorteil, wenn eine Force-Feedback-Funktionalität gegebenenfalls in Verbindung mit einer Force-Sense-Funktionalität des Touch-Panels des Bedienelements vorhanden ist.

Eine weitere vorteilhafte Ausgestaltung der Erfindung besteht darin, dass wenn das Halteelement zumindest teilweise auf der berührungssensitiven Oberfläche der Oberseite des Touch-Panels angeordnet ist, wobei in jeder Bewegungsposition des Bedienelements zumindest eines der Bewegungs-Detektionsgeberelemente bzw. zumindest einer der ersten Federarme und zumindest eines der Drück-Detektionsgeberelemente bzw. zumindest einer der zweiten Federarme in demjenigen Bereich der Oberseite des Halteelements positioniert ist, unterhalb dessen sich die berührungssensitive Oberfläche der Oberseite des Touch-Panels befindet.

Ferner ist es von Vorteil, wenn in jeder Bewegungsposition des Bedienelements mindestens zwei der Bewegungs-Detektionsgeberelemente bzw. mindestens zwei der ersten Federarme und mindestens eines der Drück-Detektionsgeberelemente bzw. zumindest einer der zweiten Federarme in demjenigen Bereich der Oberseite des Halteelements positioniert sind, unterhalb dessen sich die berührungssensitive Oberfläche der Oberseite des Touch-Panels befindet.

Schließlich sieht eine weitere Ausgestaltung der Erfindung vor, dass die Bedieneinheit unbeweglich auf der Oberseite des Touch-Panels angeordnet ist oder dass die Bedieneinheit die auf der Oberseite des Touch-Panels verschiebbar ist (bspw. durch eine Magnethalterung der Bedieneinheit oder eine mechanische Halterungslösung mit der Möglichkeit der Verschiebung).

Ausführungsbeispiele der Erfindung werden nachfolgend anhand der Zeichnung näher erläutert. Im Einzelnen zeigen dabei:
- Fig. 1: eine Ansicht auf die Mittelkonsole und den mittleren Teil der Instrumententafel eines Fahrzeugs mit erfindungsgemäßer Bedienvorrichtung,
- Fig. 2: eine perspektivische Darstellung des Bedienelements der Bedienvorrichtung auf dem berührungssensitiven Touch-Panel,
- Fig. 3: einen Schnitt durch das Bedienelement,
- Fig. 4: eine Darstellung des multifunktionalen Federelements gemäß einem ersten Ausführungsbeispiel,
- Fig. 5: eine teilweise aufgebrochene Darstellung des Bedienelements mit dem Federelement nach Fig. 4 im eingebauten Zustand und bei nicht gedrücktem Bedienelement,
- Fig. 6: eine Darstellung ähnlich der Fig. 5, wobei zusätzlich noch ein mit dem Bedienelement gekoppeltes Bauteil als Gegenlager für die Rückholfedern des Federelements dargestellt ist, und zwar im ebenfalls nicht gedrückten Zustand des Bedienelements,
- Fig. 7: die Darstellung gemäß Fig. 6 im gedrückten Zustand des Bedienelements,
- Fig. 8: eine Darstellung des multifunktionalen Federelements gemäß einem zweiten Ausführungsbeispiel,
- Fig. 9: eine teilweise aufgebrochene Darstellung des Bedienelements mit dem Federelement nach Fig. 8 im eingebauten Zustand und bei nicht gedrücktem Bedienelement,
- Fig. 10: eine Darstellung ähnlich der Fig. 9, wobei zusätzlich noch ein mit dem Bedienelement gekoppeltes Bauteil als Gegenlager für die Rückholfedern des Federelements dargestellt ist, und zwar im ebenfalls nicht gedrückten Zustand des Bedienelements,
- Fig. 11: die Darstellung gemäß Fig. 10 im gedrückten Zustand des Bedienelements und
- Fign.12 und 13: zwei Alternativen für die Realisierung einer Drück-Haptik durch die Rückholfeder, während in den Ausführungsbeispielen der Fign. 4 bis 11 die Drück-Haptik durch eine spezielle Ausgestaltung der Drück-Geberelemente in Kombination mit einer besonderen Ausgestaltung der Abtast- bzw. Rastbahn realisiert ist.

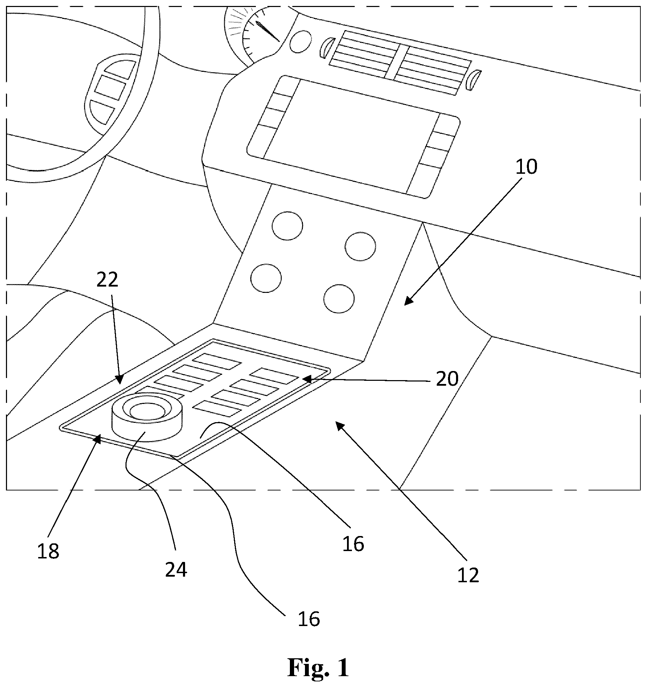

In Fig. 1 ist in perspektivischer Ansicht der Bereich um die Mittelkonsole 10 eines Fahrzeugs gezeigt. Die Mittelkonsole 10 ist mit einer Bedienvorrichtung 12 versehen, die einen Touch-Screen 14 mit einem Touch-Panel 16 und eine auf dem Touch-Screen 14 angeordnete erfindungsgemäße Bedieneinheit 18 aufweist. Bei 20 sind diverse Schaltflächen angedeutet, die auf dem Touch-Screen 14 dargestellt sind.

In diesem Ausführungsbeispiel weist die Bedieneinheit 18 als Bedienelement 22 einen ringförmigen Dreh-/Drücksteller 24 auf, von dem im Folgenden mehrere Ausführungsbeispiele beschrieben werden.

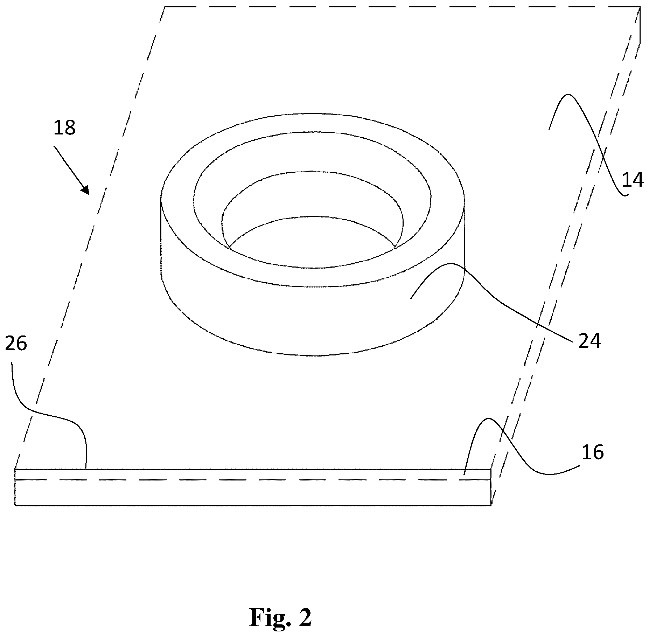

Fig. 2 verdeutlicht nochmals perspektivisch, wie der Dreh-/Drücksteller 24 auf der Oberseite des Touch-Screen 14 angeordnet ist. Das Touch-Panel 16 weist eine kapazitiv arbeitende Berührungssensorik 26 auf, die der ortsaufgelösten Positionsdetektion von Elementen der Bedieneinheit 18 dient, die, wie im Folgenden beschrieben werden wird, in Abhängigkeit von der Verdrehposition und der Drückposition des Dreh-/Drückstellers 24 kapazitiv an die Berührungssensorik 26 des Touch-Panel 16 gekoppelt sind.

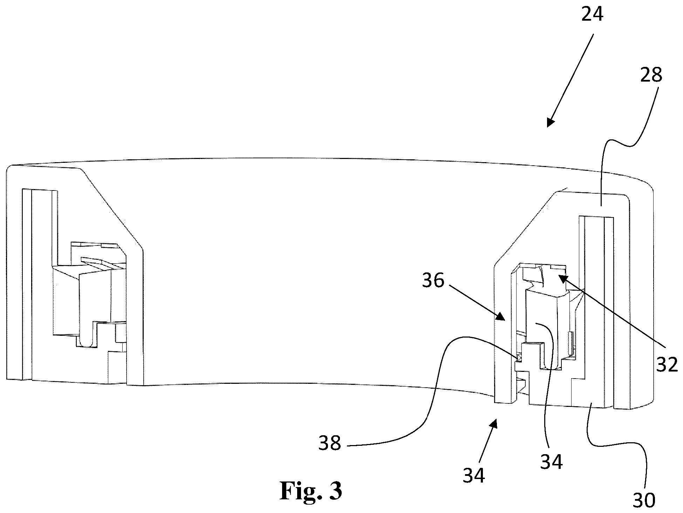

Fig. 3 zeigt einen Schnitt durch den Dreh-/Drücksteller 24. Der Dreh-/Drücksteller 24 weist einen Bedienring 28 auf, der aus elektrisch leitendem Material besteht bzw. mit elektrisch leitendem Material beschichtet ist. Der Bedienring 28 ist an einem ebenfalls ringförmigen Halteelement 30 sowohl drehbar als auch drückbar gelagert. Mit dem Bedienring 28 drehfest gekoppelt sind ein multifunktionales Federelement 32 sowie ein weiteres Bauteil 34 in im Wesentlichen Ringform, das sich wie das Federelement 32 bei Verdrehung des Bedienrings 28 mit diesem mitdreht. Beim Niederdrücken des Bedienrings 28 bewegt sich dieser axial relativ zum weiteren Bauteil 34, an dem Abstützflächen ausgebildet sind für Rückholfedern zum automatischen Rückbewegen des Bedienrings 28 nach einem Niederdrücken desselben. Auf diese Einzelheiten wird im Weiteren noch eingegangen werden.

Bestandteil des Halteelements 30 ist ferner ein Teil einer Rasteinrichtung 36, die eine Rastbahn 38 aufweist, welche aber gleichzeitig auch als Abtastbahn 40 dient, die für die Verdrehdetektion und Drückdetektion des Dreh-/Drückstellers 24 verwendet wird, worauf ebenfalls im Folgenden eingegangen wird.

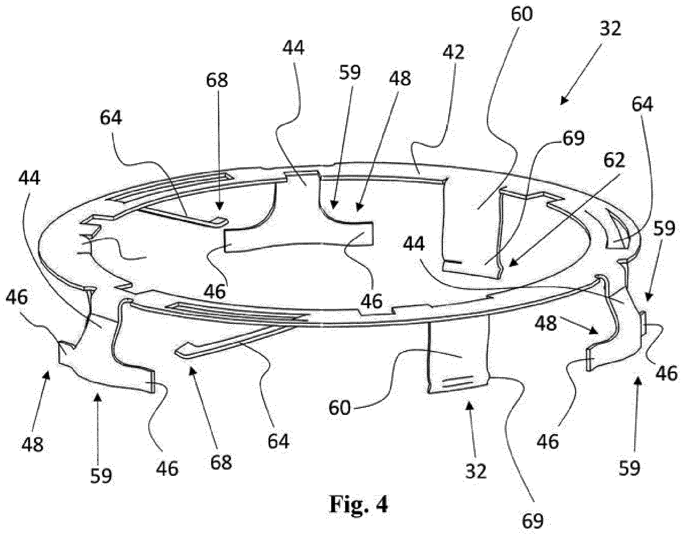

Anhand der Fign. 4 bis 7 wird nachfolgend ein erstes Ausführungsbeispiel der Erfindung beschrieben.

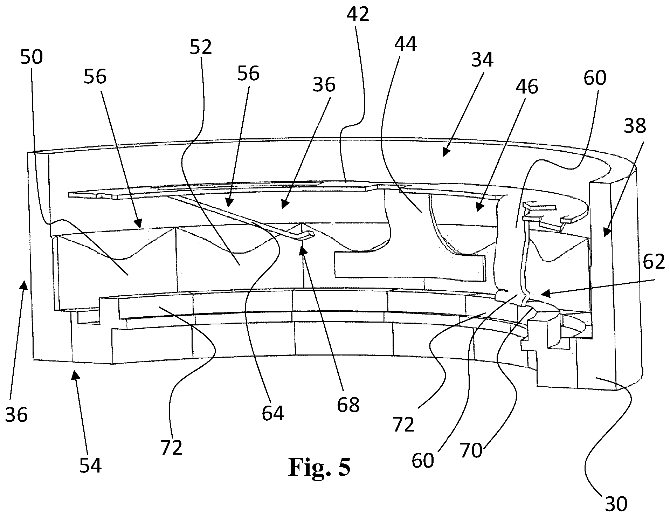

In Fig. 4 ist das multifunktionale Federelement 32 gezeigt. Dieses Federelement 32 besteht aus elektrisch leitendem Material bzw. ist mit einem derartigen Material beschichtet und weist ein Trägerelement 42 auf, das in diesem Ausführungsbeispiel als Ring ausgeführt ist. Von dem Trägerelement 42 stehen drei erste Federarme 44 ab, an deren Enden schleiferähnliche Fortsätze 46 angeordnet sind. Jede erste Federarm 44 fungiert zusammen mit den Fortsätzen 46 als Bewegungs-Detektionsgeberelement 48, indem, wie bspw. in Fig. 5 verdeutlicht, jedes Bewegungs-Detektionsgeberelement 48 mit den Fortsätzen 46 auf der Abtastbahn 40 entlanggleitet. Die Abtastbahn 40 weist erste Abschnitte 50 und zweite Abschnitte 52 auf, die abwechselnd aufeinanderfolgend angeordnet sind und an der Innenseite des Halteelements 30, also längs der Innenseite von dessen Umfangswand abstehend angeordnet sind. Die ersten Abschnitte 50 sind elektrisch leitend und erstrecken sich bis zur Unterseite 54 des Halteelements 30, mit der die gesamte Bedieneinheit 18 auf der Oberseite des Touch-Screen 16 aufliegt. Die zweiten Abschnitte 52 sind elektrisch nicht leitend. Die Abschnitte 50 und 52 sind jeweils als Rastvorsprünge 56 der Rastbahn 38 ausgeführt, die dementsprechend zwischen jeweils benachbarten Rastvorsprüngen Rastvertiefungen 58 aufweist. Wird nun der Bedienring 28 verdreht, so schleifen die Bewegungs-Detektionsgeberelemente 48 auf der als Rastbahn 38 ausgeführten Abtastbahn 40 entlang, wobei sie in jeder Verdrehposition mindestens einen elektrisch leitenden ersten Abschnitt 50 der Abtastbahn 40 kontaktieren. Das elektrisch leitende multifunktionale Federelement 32 ist seinerseits elektrisch verbunden mit dem Bedienring 28, so dass es bei manuellem Erfassen des Bedienrings 28 zu einer kapazitiven Kopplung der Bewegungs-Detektionsgeberelemente 48 mit dem Touch-Screen 16 kommt, wie dies der Fall ist, wenn man mit bspw. einem Finger einer Hand den Touch-Screen berührt. Neben der elektrischen Detektionsfunktion arbeiten die Bewegungs-Detektionsgeberelemente 48 also auch als Rastelemente 59 der Rasteinrichtung 36.

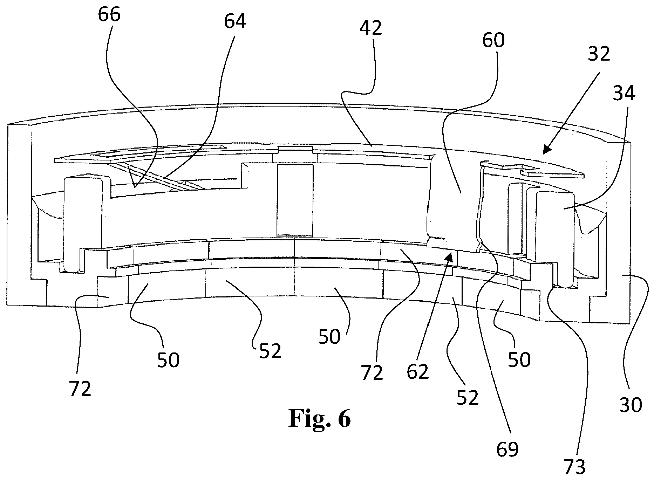

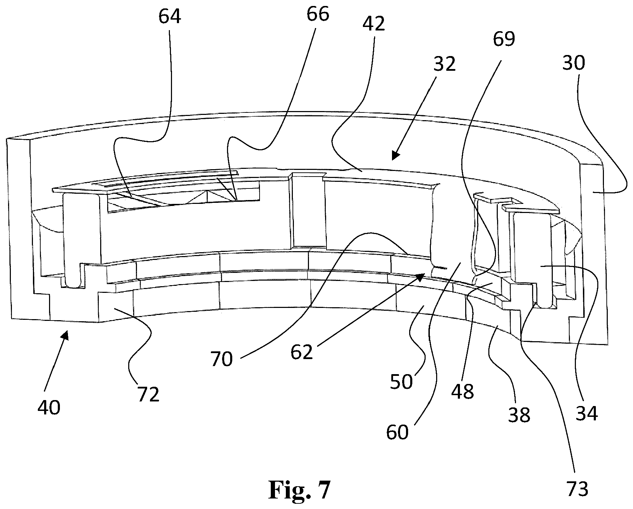

Wie anhand von Fig. 4 zu erkennen ist, weist dieses multifunktionale Federelement 32 drei zweite Federarme 60 auf, die an ihren Enden Kontaktenden 62 aufweisen, über die jeder der drei zweiten Federarme 60 in Kontakt mit der Abtastbahn 40 gelangt, wenn der Bedienring 28 gedrückt wird. In den Fign. 5 und 6 ist diejenige Situation gezeigt, in der der Bedienring 28 nicht gedrückt ist. Die Kontaktenden 62 der zweiten Federarme 60 liegen oberhalb der einzelnen Abschnitte 50, 52 der Abtastbahn 40. Wenn der Bedienring 28 niedergedrückt ist, stellt sich die Situation gemäß Fig. 7 ein, in der jeder zweite Federarm 60 zwei benachbarte erste und zweite Abschnitte 50, 52 der Abtastbahn 40 kontaktiert. Damit kommt es im gedrückten Zustand zu einer weiteren kapazitiven Kopplung mit dem Touch-Screen 16, jedoch an anderen Stellen als denjenigen, an denen aufgrund der aktuell eingenommenen Verdrehposition des Bedienrings 28 es bereits zu kapazitiven Kopplungen kommt. Die Anzahl und Position der einzelnen Stellen auf dem Touch-Screen bzw. dem Touch-Panel, an denen es bei gedrücktem und bei nicht gedrücktem Bedienring 28 zu der kapazitiven Kopplung und damit zu einer "Berührungs-" Erkennung kommt, sind verschieden voneinander, womit unterschieden werden kann, ob der Bedienring 28 neben der aktuell eingenommenen Verdrehposition gedrückt wird oder nicht.

Die automatische Rückbewegung des Bedienrings 28 nach dessen Niederdrücken wird ebenfalls mithilfe des multifunktionalen Federelements 32 realisiert, das zu diesem Zweck in diesem Ausführungsbeispiel drei dritte Federarme 64 aufweist, die wie die anderen Federarme 44 und 60 von dem Trägerelement 42 abstehen. Diese dritten Federarme 64 stützen sich auf Abstützflächen 66 an dem zusätzlichen Bauteil 34 ab, relativ zu dem das multifunktionale Federelement 32 axial niederdrückbar ist und mit dem zusammen sich das multifunktionale Federelement 32 verdreht, wenn der Bedienring 28 verdreht wird.

In Fig. 6 ist die Situation beschrieben, in der der Bedienring 26 nicht gedrückt ist. Das multifunktionale Federelement 32 hat einen Abstand zum Bauteil 34, der im Wesentlichen gleich dem Ausmaß des Niederdrückens des Bedienrings 28 entspricht. Beim Niederdrücken des Bedienrings 28 gleiten die gekrümmten Enden 68 der dritten Federarme 64 auf den ihnen zugeordneten Abstützflächen 66 entlang. Damit werden die dritten Federarme 64 beim Niederdrücken gespannt und bauen somit diejenige Kraft auf bzw. speichern diejenige Energie, die benötigt wird, um den Bedienring 28 nach einem Niederdrücken wieder in die Ausgangsposition zurückzubewegen.

Nachdem nun für das erste Ausführungsbeispiel die elektrischen Funktionen des multifunktionalen Federelements 32 und seine Rückholfunktion beschrieben worden sind, soll nachfolgend noch auf die Haptik-Funktionen eingegangen werden. Wie oben bereits erwähnt, dienen die Bewegungs-Detektionsgeberelemente 48 auch als Rastelemente 59, die rastend mit der Rastbahn 38 zusammenwirken. Damit ist die Dreh-Haptik realisiert, und zwar durch dieselben Elemente, die auch der Bewegungsdetektion dienen.

Die Drück-Haptik mit Snap-Funktion wird z.B. realisiert durch eine spezielle Formgebung der Kontaktenden 62 der zweiten Federarme 60 (siehe die Sicken 69) in Kombination mit einer Ablenkkante bzw. einem Ablenkvorsprung 70 an der Rastbahn 38 bzw. an den Fortsätzen 72 der ersten und zweiten Abschnitte 50, 52 der Abtastbahn 40, die unter anderem auch der Führung des zusätzlichen Bauteils 34 (siehe die Führungsnut 73, in die das Bauteil 34 eingetaucht ist) und der Verbindung zur Unterseite 54 des Halteelements 30 dienen. Diese Situation ist in den Fign. 6 und 7 gezeigt. In der Niederdrückposition des Bedienrings 28 gemäß Fig. 7 ist das Kontaktende 62 jedes zweiten Federarms 60 zwangsausgelenkt. Durch die Zwangsauslenkung entsteht ein zusätzlicher mechanischer Widerstand, der beim Niederdrücken des Bedienrings 28 überwunden werden muss und die Snap-Funktion realisiert.

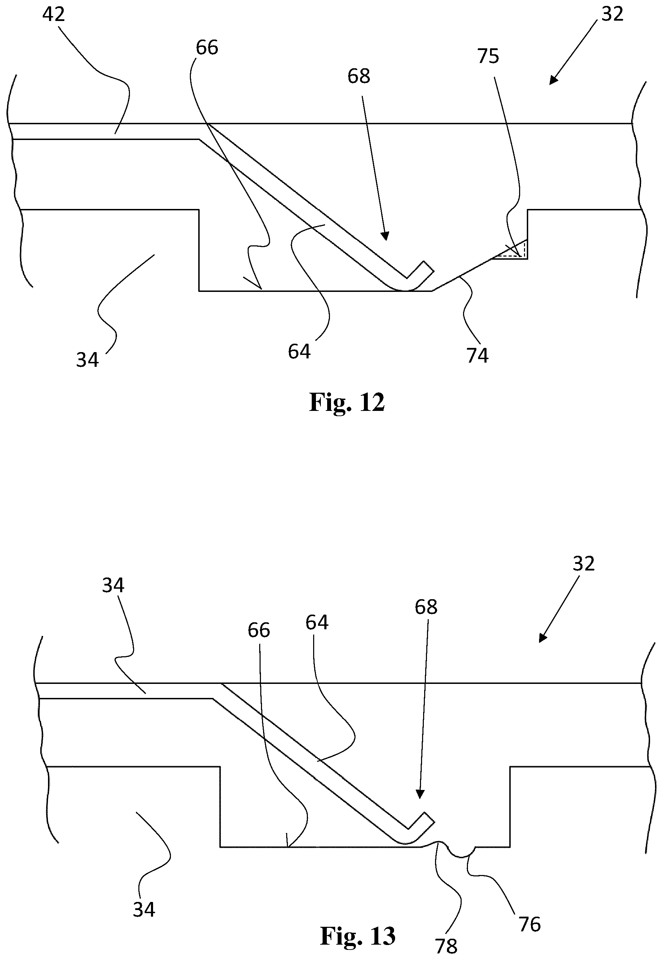

Alternativ könnte man die Drück-Haptik mit Snap-Funktion auch durch eine spezielle Oberflächenstruktur der Abstützflächen 66 realisieren, wie es in den Fign. 12 und 13 angedeutet ist. Gemäß Fig. 12 ist zu diesem Zweck vorgesehen, dass das Ende 68 jedes dritten Federarms 64 bei Einnahme der Niederdrückposition des Bedienrings 28 auf eine Anschrägung 74 aufgeschoben oder über die Anschrägung 74 bis auf ein Plateau 65 (in Fig. 12 durch gestrichelte Linie dargestellt) angehoben ist. Alternativ oder zusätzlich kann aber jeder dritte Federarm 64 mit seinem Ende 68 auch in eine Vertiefung 76 der Abstützfläche 66 eingetaucht sein, wenn sich der Bedienring 28 in seiner niedergedrückten Position befindet. Vor der Vertiefung 76 kann im Bedarfsfalle noch eine Erhebung 78 angeordnet sein oder vor einer solchen auf eine Vertiefung verzichtet werden. Die Flankensteilheit der Anschrägung 74 bzw. Erhebung 78 und, sofern vorhanden, der Grad ihres Abfallens wirken sich auf den Snap-Effekt aus.

Beim Niederdrücken des Bedienrings 28 muss manuell gegen die Kraft der dritten Federarme 64 "gearbeitet" werden. Gegen Ende der Niederdrückbewegung kommt es dann zum Snap-Effekt in Form eines erhöhten, zu überwindenden Widerstands gegebenenfalls mit anschließendem schlagartig nachlassenden Widerstand.

Wie zuvor beschrieben, erfüllt somit das multifunktionale Federelement 32 eine Vielzahl von Funktionen, die durch die verschiedenen Federarme realisierbar sind. Zu diesen Funktionen gehören die beiden elektrischen Detektionsgeberfunktionen für die Dreh- und die Drückstellung sowie zwei und in einer besonderen Variante drei mechanische Funktionen, nämlich die Dreh-Haptik durch die Rasteinrichtung mit den wellenförmigen (Schleifer-)Enden an den ersten Federarmen 44, die Drück-Haptik durch die sich beim Niederdrücken mechanisch spannenden dritten Federarme 64 und der Snap-Funktion in der Endphase des Niederdrückens durch die zuvor beschriebenen Alternativen der Formgebung der Kontaktenden 62 der zweiten Federarme 60 und/oder der verschiedenen Varianten der Ausbildung der Abstützflächen 66, auf der die Enden 68 der dritten Federarme 64 beim Niederdrücken des Bedienelements 22 des Dreh-/Drückstellers 24 entlanggleiten. Ein einziges Bauteil also dient mehreren Zwecken und realisiert mehrere Merkmale (elektrisch und mechanisch) der erfindungsgemäßen Bedienvorrichtung, was vorteilhast ist hinsichtlich Herstellung und Montage.

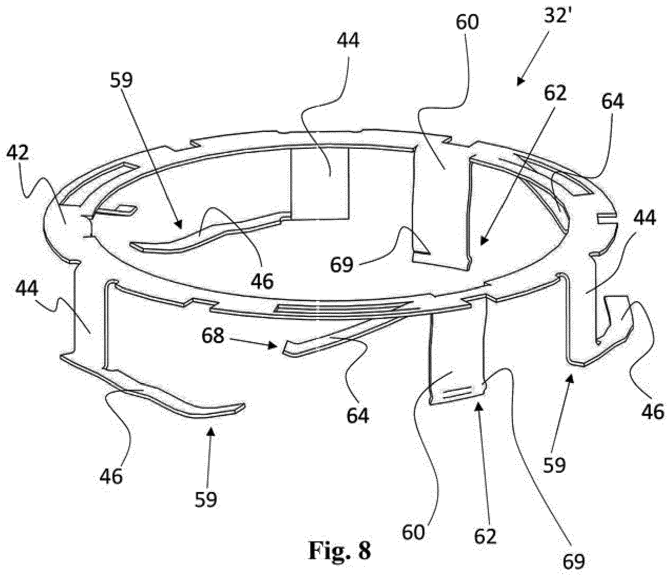

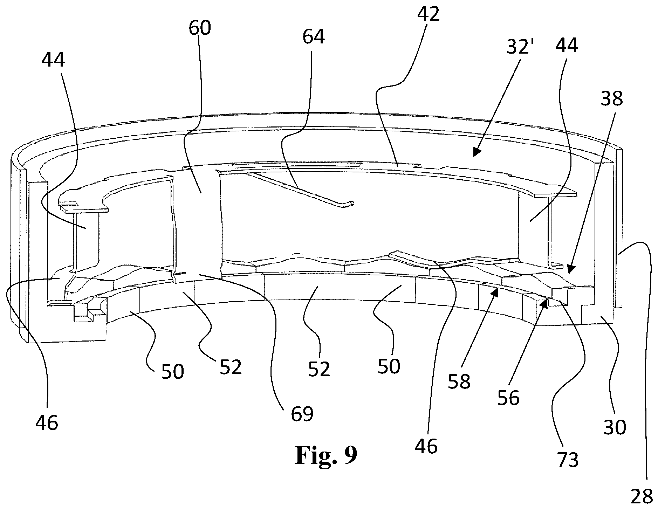

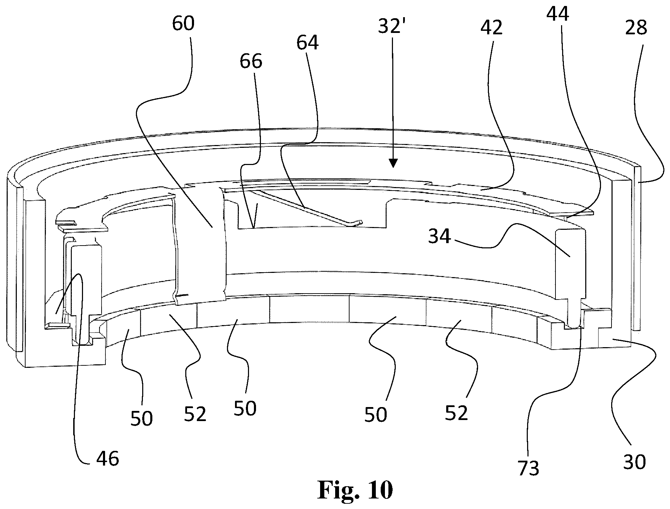

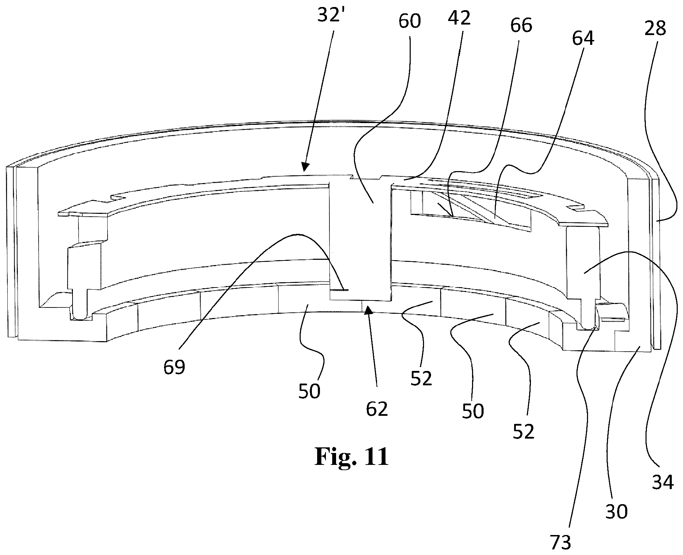

In den Fign. 8 bis 11 ist ein weiteres Ausführungsbeispiel eines multifunktionalen Federelements 32' gezeigt. In den Fign. 8 bis 11 sind diejenigen Bezugszeichen, die konstruktions- bzw. funktionsgleiche Teile zu denjenigen der Fign. 4 bis 7 zeigen, mit den gleichen Bezugszeichen wie in diesen zuletzt genannten Figuren verwendet bezeichnet.

Der wesentliche Unterschied der beiden Ausführungsformen gemäß den Fign. 4 bis 7 einerseits und 8 bis 11 andererseits ist darin zu sehen, dass die Ausrichtung der Rast- bzw. Abtastbahn im Ausführungsbeispiel der Fign. 4 bis 7 umlaufend axial ist, während die Abtast- bzw. Rastbahn im Ausführungsbeispiel der Fign. 8 bis 11 radial ausgerichtet ist. Dementsprechend befindet sich also die Abtast- bzw. Rastbahn im Ausführungsbeispiel der Fign. 8 bis 11 nicht an der Innenseite der Umfangswand des Halteelements 30 sondern auf einem flanschartigen Innenvorsprung des Halteelements 30. Somit ist die Ausrichtung der Kontaktenden 62 der ersten Federarme 44 im Ausführungsbeispiel gemäß den Fign. 8 bis 11 um 90° verdreht gegenüber der Situation im Ausführungsbeispiel der Fign. 4 bis 7.

### BEZUGSZEICHENLISTE

- 10: Mittelkonsole
- 12: Bedienvorrichtung
- 14: Touch-Screen
- 16: Touch-Panel
- 18: gesamte Bedieneinheit
- 20: Schaltflächen auf dem Touch-Screen
- 22: Bedienelement
- 24: ringförmigen Dreh-/Drücksteller
- 26: kapazitiv arbeitende Berührungssensorik
- 28: Bedienring
- 30: Halteelement
- 32: multifunktionales Federelement
- 32': multifunktionales Federelements
- 34: zusätzliches Bauteil
- 36: Rasteinrichtung
- 38: Rastbahn der Rasteinrichtung
- 40: Abtastbahn
- 42: Trägerelement
- 44: erste Federarme
- 46: Fortsätze
- 48: Bewegungs-Detektionsgeberelement
- 50: erste Abschnitte der Abtastbahn
- 52: zweite Abschnitte der Abtastbahn
- 54: Unterseite des Halteelements
- 56: Rastvorsprünge der Rastbahn
- 58: Rastvertiefungen der Rastbahn
- 59: Rastelement der Rasteinrichtung
- 60: zweite Federarme
- 62: Kontaktenden der zweiten Federarme
- 64: dritte Federarme
- 66: Abstützflächen an dem Bauteil
- 68: gekrümmten Enden der dritten Federarme
- 69: Sicken in den Kontaktenden der zweiten Federarme
- 70: Ablenkvorsprung an der Abtastbahn
- 72: Fortsätze
- 73: Führungsnut für das Bauteil
- 74: Anschrägung auf der Stützfläche
- 75: Plateau
- 76: Vertiefung auf der Stützfläche
- 78: Erhebung

## Patentansprüche

1. Bedienvorrichtung für ein Fahrzeug, mit
- einem kapazitiv arbeitenden Touch-Panel (16), das eine berührungssensitive Oberseite aufweist,
- einer Bedieneinheit (18), die ein manuell erfassbares Bedienelement (22) mit einer elektrisch leitenden Oberfläche und ein mit einer Oberseite und einer dieser abgewandten Unterseite (54) versehenes Halteelement (30) aufweist, an welchem das Bedienelement (22) translatorisch und/oder rotatorisch in zur Oberseite des Touch-Panels (16) parallelen Richtung und orthogonal zur Oberseite des Touch-Panels (16) bewegbar angeordnet ist,
- wobei das Bedienelement (22) mindestens ein mit der elektrisch leitenden Oberfläche des Bedienelements (22) elektrisch verbundenes Bewegungs-Detektionsgeberelement (48) in Form vorzugsweise eines Schleifers aufweist, das bei Bewegung des Bedienelements (22) auf einer Abtastbahn (40) des Halteelements (30) entlang gleitet,
- wobei das Halteelement (30) längs der Abtastbahn (40) wechselweise aufeinanderfolgende erste Abschnitte (50) und zweite Abschnitte (52) aufweist,
- wobei die Ober- und die Unterseite (54) des Halteelements (30) in den ersten Abschnitten (50) jeweils miteinander elektrisch leitend verbunden und in den zweiten Abschnitten (52) jeweils voneinander elektrisch isoliert sind,
- wobei die Bedieneinheit (18) eine Rasteinrichtung (36) mit mindestens einem elastischen Rastelement (59) und einer Rastbahn (38) mit wechselweise aufeinanderfolgend angeordneten Rasterhöhungen und Rastvertiefungen (58) aufweist,
- wobei die Abtastbahn (40) der Bedieneinheit (18) als Rastbahn (38) der Rasteinrichtung (36) ausgebildet ist und die Rasterhöhungen sowie die Rastvertiefungen (58) aufweist, wobei das mindestens eine Rastelement (59) auch als Bewegungs-Detektionsgeberelement (48) fungiert,
- wobei das Bedienelement (22) der Bedieneinheit (18) in Richtung auf das Halteelement (30) reversibel niederdrückbar ist und mindestens ein mit der elektrisch leitenden Oberfläche des Bedienelements (22) elektrisch verbundenes Drück-Detektionsgeberelement aufweist, das im niedergedrückten Zustand des Bedienelements (22) unabhängig von dessen Bewegungsposition mindestens einen der ersten Abschnitt der Abtastbahn (40) der Bedieneinheit (18) elektrisch leitend kontaktiert und im nicht niedergedrückten Zustand des Bedienelement (22) im Abstand zur Abtastbahn (40) der Bedieneinheit (18) angeordnet ist, und
- einem elektrisch leitenden Federelement (32), das ein elektrisch leitend mit der Oberfläche des Bedienelements (22) verbundenes Trägerelement (42) aufweist, von dem mindestens ein erster Federarm (44), der als Bewegungs-Detektionsgeberelement (48) und Rastelement (59) fungiert, mindestens ein zweiter Federarm (60), der als Drück-Detektionsgeberelement fungiert, und mindestens ein dritter Federarm (64) absteht, der als Rückholfeder für die reversible Zurückbewegung des Bedienelements (22) nach einem Niederdrücken desselben fungiert,
- wobei die drei Federarme (44, 60, 64) einstückig mit dem gemeinsamen Trägerelement (42) ausgebildet sind.

2. Bedienvorrichtung nach Anspruch 1, **dadurch gekennzeichnet, dass** das Trägerelement (42) des Federelements (32) mit dem Bedienelement (22) verbunden und bei dessen rotatorischer und/oder translatorischer Bewegung sowie Bewegung orthogonal dazu mit dem Bedienelement (22) mitbewegbar ist und dass ein zusätzliches Bauteil (34) der Bedienvorrichtung eine Abstützfläche (66) für den dritten Federarm (64) aufweist, an der der dritte Federarm (64) anliegt und in Relation zu der das Bedienelement (22) beim Niederdrücken bewegbar ist.

3. Bedienvorrichtung nach Anspruch 2, **dadurch gekennzeichnet, dass** der dritte Federarm (64) beim Niederdrücken des Bedienelements (22) auf der Abstützfläche (66) gleitet.

4. Bedienvorrichtung nach Anspruch 3, **dadurch gekennzeichnet, dass** die Abstützfläche (66) einen Vorsprung, über den der dritte Federarm (64) beim Niederdrücken des Bedienelements (22) gleitet, und/oder eine Vertiefung (76) aufweist, in die hinein der dritte Federarm (64) beim Niederdrücken des Bedienelements (22) eintaucht.

5. Bedienvorrichtung nach Anspruch 2 oder 3, **dadurch gekennzeichnet, dass** der zweite Federarm (60) einen Auslenkvorsprung oder eine Auslenkvertiefung aufweist, wobei der zweite Federarm (60) beim Niederdrücken des Bedienelements (22) durch den Auslenkvorsprung oder durch die Auslenkvertiefung reversibel verformbar ist und dadurch bei Kontaktierung der Abtastbahn (40) zum Erreichen der Niederdrückposition des Bedienelements (22) manuell zu überwindender mechanischer Widerstand entsteht.

6. Bedienvorrichtung nach Anspruch 2 oder 3, **dadurch gekennzeichnet, dass** längs der Abtastbahn (40) der Bedieneinheit (18) ein Auslenkvorsprung oder eine Auslenkvertiefung für den zweiten Federarm (60) ausgebildet ist, wobei der zweite Federarm (60) beim Niederdrücken des Bedienelements (22) durch den Auslenkvorsprung oder durch die Auslenkvertiefung reversibel verformbar ist und dadurch bei Kontaktierung der Abtastbahn (40) oder von mit den ersten und zweiten Abschnitten (50, 52) der Abtastbahn (40) jeweils verbundenen Fortsätzen (72), die wie die ersten und zweiten Abschnitte (50, 52) der Abtastbahn (40) wechselweise elektrisch mit der Unterseite des Halteelements (30) verbunden sind, ein zum Erreichen der Niederdrückposition des Bedienelements (22) manuell zu überwindender mechanischer Widerstand entsteht.

7. Bedienvorrichtung nach einem der Ansprüche 1 bis 6, **dadurch gekennzeichnet, dass** die Abtastbahn (40) eine parallel zur Oberseite des Touch-Panels (16) weisende Oberfläche oder eine Oberfläche aufweist, die orthogonal zur Oberseite des Touch-Panels (16) ausgerichtet ist.

8. Bedienvorrichtung nach einem der Ansprüche 1 bis 7, **dadurch gekennzeichnet, dass** zum verkippsicheren Niederdrücken des Bedienelements (22) von dem Trägerelement (42) des Federelements (32) mehrere, z.B. drei, dritten Federarme (64) abstehen.

9. Bedienvorrichtung nach einem der Ansprüche 1 bis 8, **dadurch gekennzeichnet, dass** der zweite Federarm (60) ein Kontaktende (62) zur Kontaktierung der Abtastbahn (40) bei niedergedrücktem Bedienelement (22) aufweist, wobei das Kontaktelement in Erstreckung der Aufeinanderfolge der ersten und zweiten Abschnitte (50, 52) betrachtet eine Abmessung aufweist, die größer ist als die Erstreckung der ersten und der zweiten Abschnitte (50, 52).

10. Bedienvorrichtung nach einem der Ansprüche 1 bis 9, **dadurch gekennzeichnet, dass** das Bedienelement (22) mindestens zwei längs der Abtastbahn (40) versetzt zueinander angeordnete Bewegungs-Detektionsgeberelemente (48) und damit mindestens zwei erste Federarme (44) aufweist, wobei sich der Versatz zwischen zwei der Bewegungs-Detektionsgeberelementen (48) bzw. zwischen zwei der ersten Federarmen (44) über eine Länge erstreckt, die gleich der Erstreckung aufeinanderfolgender erster und zweiter Abschnitte (50, 52) mit entweder einer gradzahligen Anzahl von ersten Abschnitten (50) und einer ungradzahligen Anzahl von zweiten Abschnitten (52) oder mit einer ungradzahligen Anzahl von ersten Abschnitten (50) und einer gradzahligen Anzahl von zweiten Abschnitten (52) ist, wobei in jeder Bewegungsposition des Bedienelements (22) einer dieser beiden Bewegungs-Detektionsgeberelemente (48) bzw. einer dieser beiden ersten Federarmen (44) einen ersten Abschnitt (50) der Abtastbahn (40) kontaktiert.

11. Bedienvorrichtung nach einem der Ansprüche 1 bis 10, **dadurch gekennzeichnet, dass** das Bedienelement (22) mindestens zwei längs der Abtastbahn (40) versetzt angeordnete Drück-Detektionsgeberelemente und damit mindestens zwei zweite Federarme (60) aufweist, wobei in jeder Bewegungsposition des Bedienelements (22) mindestens einer dieser beiden Drück-Detektionsgeberelemente bzw. mindestens einer dieser beiden zweiten Federarme (60) einen ersten Abschnitt der Abtastbahn (40) kontaktiert.

12. Bedienvorrichtung nach Anspruch 11, **dadurch gekennzeichnet, dass** sich der Versatz zwischen den beiden besagten Drück-Detektionsgeberelementen bzw. zwischen den beiden besagten zweiten Federarme (60) über eine Länge erstreckt, die gleich der Erstreckung aufeinanderfolgender erster und zweiter Abschnitte (50, 52) mit entweder einer gradzahligen Anzahl von ersten Abschnitten (50) und einer ungradzahligen Anzahl von zweiten Abschnitten (52) oder einer ungradzahligen Anzahl von ersten Abschnitten (50) und einer gradzahligen Anzahl von zweiten Abschnitten (52) ist.

13. Bedienvorrichtung nach einem der Ansprüche 1 bis 12, **dadurch gekennzeichnet, dass** sich jeder längs der Abtastbahn (40) angeordnete erste und zweite Abschnitte (50, 52) des Halteelements (30) von der Mitte einer Rastvertiefung (58) bis zur Mitte einer benachbarten Rastvertiefung (58) oder von der Mitte einer Rasterhöhung bis zur Mitte einer benachbarten Rasterhöhung erstreckt.

14. Bedienvorrichtung nach einem der Ansprüche 1 bis 13, **dadurch gekennzeichnet, dass** das Bedienelement (22) als ein niederdrückbarer Schieber oder ein niederdrückbarer Drehsteller ausgebildet ist.

15. Bedienvorrichtung nach einem der Ansprüche 1 bis 14, **dadurch gekennzeichnet, dass** das Touch-Panel (16) als Teil eines Touchscreens oder als ein kapazitiv arbeitendes Touch-Pad oder als eine kapazitiv arbeitende Touch-Folie ausgebildet ist.

16. Bedienvorrichtung nach einem der Ansprüche 1 bis 15, **gekennzeichnet durch** eine Force-Feedback-Funktionalität gegebenenfalls in Verbindung mit einer Force-Sense-Funktionalität des Touch-Panels (16) des Bedienelements (22).

17. Bedienvorrichtung nach einem der Ansprüche 1 bis 16, **dadurch gekennzeichnet, dass** das Halteelement (30) zumindest teilweise auf der berührungssensitiven Oberfläche der Oberseite des Touch-Panels (16) angeordnet ist, wobei in jeder Bewegungsposition des Bedienelements (22) zumindest eines der Bewegungs-Detektionsgeberelemente (48) bzw. zumindest einer der ersten Federarme (44) und zumindest eines der Drück-Detektionsgeberelemente bzw. zumindest einer der zweiten Federarme (60) in demjenigen Bereich der Oberseite des Halteelements (30) positioniert ist, unterhalb dessen sich die berührungssensitive Oberfläche der Oberseite des Touch-Panels (16) befindet.

18. Bedienvorrichtung nach Anspruch 17, **dadurch gekennzeichnet, dass** in jeder Bewegungsposition des Bedienelements (22) mindestens zwei der Bewegungs-Detektionsgeberelemente (48) bzw. mindestens zwei der ersten Federarme (44) und mindestens eines der Drück-Detektionsgeberelemente bzw. zumindest einer der zweiten Federarme (60) in demjenigen Bereich der Oberseite des Halteelements (30) positioniert sind, unterhalb dessen sich die berührungssensitive Oberfläche der Oberseite des Touch-Panels (16) befindet.

19. Bedienvorrichtung nach einem der Ansprüche 1 bis 18, **dadurch gekennzeichnet, dass** die Bedieneinheit (18) unbeweglich auf der Oberseite des Touch-Panels (16) angeordnet ist oder dass die Bedieneinheit (18) die auf der Oberseite des Touch-Panels (16) verschiebbar ist.

## Claims

1. An operating device for a vehicle, comprising
- a capacitively operating touch panel (16) having a touch-sensitive upper face,
- an operating unit (18) having an operating element (22) which can be grasped manually and has an electrically conductive surface, and having a holding element (30) which is provided with an upper face and a lower face (54) facing away from the upper face and on which the operating element (22) is arranged so as to be movable in a translatory and/or rotatory manner in a direction parallel to the upper face of the touch panel (16) and orthogonal to the upper face of the touch panel (16),
- wherein the operating element (22) comprises at least one motion detection encoder element (48) electrically connected to the electrically conductive surface of the operating element (22), preferably in the form of a wiper sliding along a sensing path (40) of the holding element (30) when the operating element (22) is moved,
- wherein the holding element (30) comprises alternately successive first sections (50) and second sections (52) along the sensing path (40),
- wherein the upper and lower faces (54) of the holding element (30) are connected to each other in an electrically conductive manner in each of the first sections (50) and are electrically insulated from each other in each of the second sections (52),
- wherein the operating unit (18) comprises a latching means (36) having at least one elastic latching element (59) and a latching path (38) with alternately successively arranged latching protrusions and latching recesses (58),
- wherein the sensing path (40) of the operating unit (18) is configured as a sensing patch (38) of the latching means (36) and comprises the latching protrusions and the latching recesses (58), wherein the at least one latching element (59) also serves as a motion detection encoder element (48),
- wherein the operating element (22) of the operating unit (18) is reversibly depressible towards the holding element (30) and comprises at least one push detection encoder element electrically connected to the electrically conductive surface of the operating element (22), which, in the depressed state of the operating element (22), makes electrically conductive contact with at least one of the first sections of the sensing path (40) of the operating unit (18), irrespective of its movement position, and is arranged at a distance from the sensing path (40) of the operating unit (18) in the non-depressed state of the operating element (22), and
- an electrically conductive spring element (32) comprising a support element (42) connected to the surface of the operating element (22) in an electrically conductive manner, from which at least one first spring arm (44) serving as the motion detection encoder element (48) and the latching element (59), at least one second spring arm (60) serving as the push detection encoder element, and at least one third spring arm (64) serving as a return spring for the reversible return movement of the operating element (22) after depressing the same protrude,
- wherein the three spring arms (44, 60, 64) are integrally formed with the common support element (42).

2. The operating device according to claim 1, **characterized in that** the support element (42) of the spring element (32) is connected to the operating element (22) and can be moved along with the operating element (22) during its rotary and/or translatory movement and movement orthogonal thereto, and **in that** an additional component (34) of the operating device has a supporting surface (66) for the third spring arm (64) on which the third spring arm (64) abuts and in relation to which the operating element (22) is movable when being depressed.

3. The operating device according to claim 2, **characterized in that** the third spring arm (64) slides on the supporting surface (66) when the operating element (22) is depressed.

4. The operating device according to claim 3, **characterized in that** the supporting surface (66) comprises a protrusion over which the third spring arm (64) slides when the operating element (22) is depressed, and/or a recess (76) into which the third spring arm (64) plunges when the operating element (22) is depressed.

5. The operating device according to claim 2 or 3, **characterized in that** the second spring arm (60) comprises a deflecting protrusion or a deflecting recess, wherein the second spring arm (60) is reversibly deformable by the deflecting protrusion or by the deflecting recess when the operating element (22) is depressed, thus creating a mechanical resistance to be overcome manually when the sensing path (40) is contacted in order to reach the depressed position of the operating element (22).

6. The operating device according to claim 2 or 3, **characterized in that** a deflecting protrusion or a deflecting recess for the second spring arm (60) is formed along the sensing path (40) of the operating unit (18), wherein the second spring arm (60) is reversibly deformable by the deflecting protrusion or by the deflecting recess when the operating element (22) is depressed, and thus, when contacting the sensing path (40) or with extensions (72) connected to the first and second sections (50, 52) of the sensing path (40), which, like the first and second sections (50, 52) of the sensing path (40), are alternately electrically connected to the lower face of the holding element (30), a mechanical resistance to be overcome manually in order to reach the depressed position of the operating element (22) is created.

7. The operating device according to any one of claims 1 to 6, **characterized in that** the sensing path (40) has a surface facing parallel to the upper face of the touch panel (16) or a surface oriented orthogonal to the upper face of the touch panel (16).

8. The operating device according to any one of claims 1 to 7, **characterized in that** a plurality of, for example three, third spring arms (64) protrude from the support element (42) of the spring element (32) for depressing the operating element (22) in a tilt-proof manner.

9. The operating device according to any one of claims 1 to 8, **characterized in that** the second spring arm (60) comprises a contact end (62) for contacting the sensing path (40) when the operating element (22) is depressed, wherein the contact element has a dimension which is greater than the extension of the first and second sections (50, 52) when viewed in the extension of the succession of the first and second sections (50, 52).

10. The operating device according to any one of claims 1 to 9, **characterized in that** the operating element (22) comprises at least two motion detection encoder elements (48) arranged offset to one another along the sensing path (40) and thus comprises at least two first spring arms (44), wherein the offset between two of the motion detection encoder elements (48) or between two of the first spring arms (44) extends across a length equal to the extension of successive first and second sections (50, 52) with either an even number of first sections (50) and an uneven number of second sections (52) or with an uneven number of first sections (50) and an even number of second sections (52), wherein one of said two motion detection encoder elements (48) or one of said two first spring arms (44) contacts a first section (50) of the sensing path (40) in each movement position of the operating element (22).

11. The operating device according to any one of claims 1 to 10, **characterized in that** the operating element (22) comprises at least two push detection encoder elements arranged offset along the sensing path (40) and thus comprises at least two second spring arms (60), wherein at least one of said two push detection encoder elements or at least one of said two second spring arms (60) contacts a first section of the sensing path (40) in each movement position of the operating element (22).

12. The operating device according to claim 11, **characterized in that** the offset between the said two push detection encoder elements or between said two second spring arms (60) extends across a length equal to the extension of successive first and second sections (50, 52) with either an even number of first sections (50) and an uneven number of second sections (52) or an uneven number of first sections (50) and an even number of second sections (52).

13. The operating device according to any one of claims 1 to 12, **characterized in that** each first and second section (50, 52) of the holding element (30) arranged along the sensing path (40) extends from the center of a latching recess (58) to the center of an adjacent latching recess (58) or from the center of a latching elevation to the center of an adjacent latching elevation.

14. The operating device according to any one of claims 1 to 13, **characterized in that** the operating element (22) is formed as a depressible slider or a depressible rotary adjuster.

15. The operating device according to any one of claims 1 to 14, **characterized in that** the touch panel (16) is formed as a part of a touch screen or as a capacitively operating touch pad or as a capacitively operating touch film.

16. The operating device according to any one of claims 1 to 15, **characterized by** a force feedback functionality optionally in combination with a force sense functionality of the touch panel (16) of the operating element (22).

17. The operating device according to any one of claims 1 to 16, **characterized in that** the holding element (30) is at least partially arranged on the touch-sensitive surface of the upper face of the touch panel (16), wherein, in each movement position of the operating element (22), at least one of the motion detection encoder elements (48) or at least one of the first spring arms (44) and at least one of the push detection encoder elements or at least one of the second spring arms (60) is positioned **in that** region of the upper face of the holding element (30) below which the touch-sensitive surface of the upper face of the touch panel (16) is located.

18. The operating device according to claim 17, **characterized in that**, in each movement position of the operating element (22), at least two of the motion detection encoder elements (48) or at least two of the first spring arms (44) and at least one of the push detection encoder elements or at least one of the second spring arms (60) are positioned **in that** region of the upper face of the holding element (30) below which the touch-sensitive surface of the upper face of the touch panel (16) is located.

19. The operating device according to any one of claims 1 to 18, **characterized in that** the operating unit (18) is arranged immovably on the upper face of the touch panel (16), or **in that** the operating unit (18) is displaceable on the upper face of the touch panel (16).

## Revendications

1. Dispositif de commande pour un véhicule, comprenant
- un panneau tactile capacitif (16) présentant une face supérieure sensible au toucher,
- une unité de commande (18) qui comporte un élément de commande (22) pouvant être saisi manuellement et présentant une surface électriquement conductrice, ainsi qu'un élément de retenue (30) qui présente une face supérieure et une face inférieure (54) détournée de celle-ci et sur lequel l'élément de commande (22) est disposé de manière à pouvoir se déplacer en translation et/ou en rotation dans une direction parallèle à la face supérieure du panneau tactile (16) et orthogonale à la face supérieure du panneau tactile (16),
- l'élément de commande (22) comportant au moins un élément capteur de détection de mouvement (48) relié électriquement à la surface électriquement conductrice de l'élément de commande (22), de préférence sous la forme d'un curseur qui glisse le long d'une piste de balayage (40) de l'élément de retenue (30) lors du déplacement de l'élément de commande (22),
- l'élément de retenue (30) comportant des premières sections (50) et des deuxièmes sections (52) qui se succèdent en alternance le long de la piste de balayage (40),
- les faces supérieure et inférieure (54) de l'élément de retenue (30) étant reliées l'une à l'autre de manière électriquement conductrice dans les premières sections (50) et étant isolées électriquement l'une de l'autre dans les deuxièmes sections (52),
- l'unité de commande (18) comportant un dispositif d'encliquetage (36) qui comprend au moins un élément d'encliquetage élastique (59) et une piste d'encliquetage (38) sur laquelle sont disposés en alternance des bossages d'encliquetage et des creux d'encliquetage (58),
- la piste de balayage (40) de l'unité de commande (18) étant conçue comme la piste d'encliquetage (38) du dispositif d'encliquetage (36) et comportant les bossages d'encliquetage et les creux d'encliquetage (58), ledit au moins un élément d'encliquetage (59) faisant également office d'élément capteur de détection de mouvement (48),
- l'élément de commande (22) de l'unité de commande (18) pouvant être enfoncé de manière réversible en direction vers l'élément de retenue (30) et comportant au moins un élément capteur de détection de pression relié électriquement à la surface électriquement conductrice de l'élément de commande (22), lequel, à l'état enfoncé de l'élément de commande (22), indépendamment de la position de déplacement de celui-ci, entre en contact de manière électriquement conductrice avec au moins une première section de la piste de balayage (40) de l'unité de commande (18) et, à l'état non enfoncé de l'élément de commande (22), est disposé à distance de la piste de balayage (40) de l'unité de commande (18), et
- un élément à ressort électriquement conducteur (32) qui comporte un élément de support (42) relié de manière électriquement conductrice à la surface de l'élément de commande (22), duquel font saillie au moins un premier bras de ressort (44), qui fait office d'élément capteur de détection de mouvement (48) et d'élément d'encliquetage (59), au moins un deuxième bras de ressort (60), qui fait office d'élément capteur de détection de pression, et au moins un troisième bras de ressort (64), qui fait office de ressort de rappel pour le mouvement de retour réversible de l'élément de commande (22) après un enfoncement de celui-ci,
- les trois bras de ressort (44, 60, 64) étant formés d'un seul tenant avec l'élément de support commun (42).

2. Dispositif de commande selon la revendication 1,
**caractérisé en ce que** l'élément de support (42) de l'élément à ressort (32) est relié à l'élément de commande (22) et peut se déplacer conjointement avec l'élément de commande (22) lors de son mouvement de rotation et/ou de translation ainsi que lors d'un mouvement orthogonal à celui-ci, et
**en ce qu'**un composant supplémentaire (34) du dispositif de commande présente une surface d'appui (66) pour le troisième bras de ressort (64), contre laquelle le troisième bras de ressort (64) s'appuie et par rapport à laquelle l'élément de commande (22) est peut être déplacé lors de l'enfoncement.

3. Dispositif de commande selon la revendication 2,
**caractérisé en ce que** le troisième bras de ressort (64) glisse sur la surface d'appui (66) lors de l'enfoncement de l'élément de commande (22).

4. Dispositif de commande selon la revendication 3,
**caractérisé en ce que** la surface d'appui (66) présente une saillie sur laquelle glisse le troisième bras de ressort (64) lors de l'enfoncement de l'élément de commande (22), et/ou un creux (76) dans lequel s'enfonce le troisième bras de ressort (64) lors de l'enfoncement de l'élément de commande (22).

5. Dispositif de commande selon la revendication 2 ou 3,
**caractérisé en ce que** le deuxième bras de ressort (60) comporte une saillie de déviation ou un creux de déviation, le deuxième bras de ressort (60) pouvant être déformé de manière réversible par la saillie de déviation ou par le creux de déviation lors de l'enfoncement de l'élément de commande (22), moyennant quoi, lors de la venue en contact avec la piste de balayage (40), une résistance mécanique est créée qui doit être surmontée manuellement pour atteindre la position enfoncée de l'élément de commande (22).

6. Dispositif de commande selon la revendication 2 ou 3,
**caractérisé en ce qu'**une saillie de déviation ou un creux de déviation pour le deuxième bras de ressort (60) est formé le long de la piste de balayage (40) de l'unité de commande (18), le deuxième bras de ressort (60) pouvant être déformé de manière réversible par la saillie de déviation ou par le creux de déviation lors de l'enfoncement de l'élément de commande (22), moyennant quoi, lors de la venue en contact avec la piste de balayage (40) ou grâce à des prolongements (72) respectivement reliés aux premières et deuxièmes sections (50, 52) de la piste de balayage (40), qui, comme les premières et deuxièmes sections (50, 52) de la piste de balayage (40), sont reliés électriquement en alternance à la face inférieure de l'élément de retenue (30), une résistance mécanique est créée qui doit être surmontée manuellement pour atteindre la position enfoncée de l'élément de commande (22).

7. Dispositif de commande selon l'une des revendications 1 à 6,
**caractérisé en ce que** la piste de balayage (40) présente une surface dirigée parallèlement à la face supérieure du panneau tactile (16) ou une surface orientée orthogonalement à la face supérieure du panneau tactile (16).

8. Dispositif de commande selon l'une des revendications 1 à 7,
**caractérisé en ce que**, pour assurer l'enfoncement sans basculement de l'élément de commande (22), plusieurs, par exemple trois, troisièmes bras de ressort (64) font saillie de l'élément de support (42) de l'élément à ressort (32).

9. Dispositif de commande selon l'une des revendications 1 à 8,
**caractérisé en ce que** le deuxième bras de ressort (60) comporte une extrémité de contact (62) destinée à entrer en contact avec la piste de balayage (40) lorsque l'élément de commande (22) est enfoncé, l'élément de contact présentant, vu dans l'étendue de la succession des premières et deuxièmes sections (50, 52), une dimension supérieure à l'étendue des premières et deuxièmes sections (50, 52).

10. Dispositif de commande selon l'une des revendications 1 à 9,
**caractérisé en ce que** l'élément de commande (22) comporte au moins deux éléments capteurs de détection de mouvement (48) disposés de manière décalée l'un par rapport à l'autre le long de la piste de balayage (40) et, par conséquent, au moins deux premiers bras de ressort (44), et le décalage entre deux des éléments capteurs de détection de mouvement (48) ou entre deux des premiers bras de ressort (44) s'étend sur une longueur égale à l'étendue des premières et deuxièmes sections successives (50, 52) avec soit un nombre pair de premières sections (50) et un nombre impair de deuxièmes sections (52), soit un nombre impair de premières sections (50) et un nombre pair de deuxièmes sections (52), sachant que, dans chaque position de déplacement de l'élément de commande (22), l'un de ces deux éléments capteurs de détection de mouvement (48) ou l'un de ces deux premiers bras de ressort (44) entre en contact avec une première section (50) de la piste de balayage (40).

11. Dispositif de commande selon l'une des revendications 1 à 10,
**caractérisé en ce que** l'élément de commande (22) comporte au moins deux éléments capteurs de détection de pression disposés de manière décalée le long de la piste de balayage (40) et, par conséquent, au moins deux deuxièmes bras de ressort (60), sachant que dans chaque position de déplacement de l'élément de commande (22), au moins l'un de ces deux éléments capteurs de détection de pression ou au moins l'un de ces deux deuxièmes bras de ressort (60) entre en contact avec une première section de la piste de balayage (40).

12. Dispositif de commande selon la revendication 11,
**caractérisé en ce que** le décalage entre lesdits deux éléments capteurs de détection de pression ou entre lesdits deux deuxièmes bras de ressort (60) s'étend sur une longueur égale à l'étendue des premières et deuxièmes sections successives (50, 52) avec soit un nombre pair de premières sections (50) et un nombre impair de deuxièmes sections (52), soit un nombre impair de premières sections (50) et un nombre pair de deuxièmes sections (52).

13. Dispositif de commande selon l'une des revendications 1 à 12,
**caractérisé en ce que** chacune des premières et deuxièmes sections (50, 52) de l'élément de retenue (30) disposées le long de la piste de balayage (40) s'étend du centre d'un creux d'encliquetage (58) jusqu'au centre d'un creux d'encliquetage adjacent (58) ou du centre d'un bossage d'encliquetage jusqu'au centre d'un bossage d'encliquetage adjacent.

14. Dispositif de commande selon l'une des revendications 1 à 13,
**caractérisé en ce que** l'élément de commande (22) est conçu sous la forme d'un curseur à enfoncer ou d'un bouton rotatif à enfoncer.

15. Dispositif de commande selon l'une des revendications 1 à 14,
**caractérisé en ce que** le panneau tactile (16) est conçu sous la forme d'une partie d'un écran tactile ou d'un pavé tactile capacitif ou d'une feuille tactile capacitive.

16. Dispositif de commande selon l'une des revendications 1 à 15,
**caractérisé par** une fonctionnalité de retour de force, le cas échéant en combinaison avec une fonctionnalité de détection de force du panneau tactile (16) de l'élément de commande (22).

17. Dispositif de commande selon l'une des revendications 1 à 16,
**caractérisé en ce que** l'élément de retenue (30) est disposé au moins partiellement sur la surface sensible au toucher de la face supérieure du panneau tactile (16), sachant que chaque position de déplacement de l'élément de commande (22), au moins l'un des éléments capteurs de détection de mouvement (48) ou au moins l'un des premiers bras de ressort (44) et au moins l'un des éléments capteurs de détection de pression ou au moins l'un des deuxièmes bras de ressort (60) est positionné dans la zone de la face supérieure de l'élément de retenue (30) sous laquelle se trouve la surface sensible au toucher de la face supérieure du panneau tactile (16).

18. Dispositif de commande selon la revendication 17,
**caractérisé en ce que**, dans chaque position de déplacement de l'élément de commande (22), au moins deux des éléments capteurs de détection de mouvement (48) ou au moins deux des premiers bras de ressort (44) et au moins l'un des éléments capteurs de détection de pression ou au moins l'un des deuxièmes bras de ressort (60) sont positionnés dans la zone de la face supérieure de l'élément de retenue (30) sous laquelle se trouve la surface sensible au toucher de la face supérieure du panneau tactile (16).

19. Dispositif de commande selon l'une des revendications 1 à 18,
**caractérisé en ce que** l'unité de commande (18) est disposée de manière immobile sur la face supérieure du panneau tactile (16), ou **en ce que** l'unité de commande (18) est coulissante sur la face supérieure du panneau tactile (16).
